# EUROPEAN PATENT APPLICATION

(11) **EP 4 715 734 A1**
(43) Date of publication of application: **25.03.2026**
(21) Application number: 25161207.3
(22) Date of filing: 03.03.2025
(51) Int. Cl.: G06T 7/00, G06T 11/00

(54) **INFORMATION PROCESSING SYSTEM, PROGRAM, AND INFORMATION PROCESSING METHOD**

(30) Priority: 19.09.2024 JP 2024162661
(71) Applicant: Fujifilm Business Innovation Corp., Tokyo 107-0052 (JP)
(72) Inventor: MORI, Tatsuya, Ebina (JP)
(74) Representative: Meissner Bolte Partnerschaft mbB

(57) **Abstract**

An information processing system includes a processor configured to: acquire an original image; receive a user operation on the original image; generate a pseudo-abnormal image containing an abnormal image feature on a basis of the acquired original image and the user operation; set an abnormality degree of the pseudo-abnormal image as a threshold value, the abnormality degree of the pseudo-abnormal image being acquired by inputting the pseudo-abnormal image into a learning model, the learning model being capable of calculating an abnormality degree of an image when the image is input; acquire an inspection target image; and perform an inspection on the inspection target image by comparing an abnormality degree of the inspection target image with the set threshold value, the abnormality degree of the inspection target image being acquired by inputting the inspection target image into the learning model.

## Description

### Background

### (i) Technical Field

The present disclosure relates to an information processing system, a program, and an information processing method.

### (ii) Related Art

Japanese Patent No. 6958277 discloses an abnormality determination method including: extracting respective reference image feature amounts corresponding to a plurality of reference images on the basis of outputs of an intermediate layer of a trained neural network to which the plurality of reference images are input; extracting a feature amount corresponding to an image of an object to be inspected on the basis of an output of the intermediate layer of the trained neural network to which the image of the object to be inspected is input; and determining whether the appearance of the object to be inspected is normal on the basis of the extracted feature amounts.

Japanese Unexamined Patent Application Publication No. 2021-174456 discloses an abnormality determination method including: setting identification information (M_thr1) that identifies normal image data (D_g) and abnormal image data (D_ng) on the basis of the output results obtained when the normal image data (D_g) and at least one type of specific abnormal image data (D_ng) are input into a learning model; inputting image data (D) of an inspection target article (W) into a normal article learning model; and determining an abnormality of the inspection target article (W) on the basis of the identification information (M_thr1).

### Summary

In some cases, an inspection on an inspection target image is performed by comparing an abnormality degree of an inspection target image with a threshold value. At this time, the abnormality degree of the inspection target image is obtained by inputting the inspection target image into a learning model. However, it is difficult to set the threshold value as intended by a user. In other words, performing the inspection on the inspection target image using the threshold value set as intended by the user is not easy.

Accordingly, it is an object of the present disclosure to facilitate the performance of an inspection on an inspection target image using a threshold value set as intended by a user.

According to a first aspect of the present disclosure, there is provided an information processing system including a processor configured to: acquire an original image; receive a user operation on the original image; generate a pseudo-abnormal image containing an abnormal image feature on a basis of the acquired original image and the user operation; set an abnormality degree of the pseudo-abnormal image as a threshold value, the abnormality degree of the pseudo-abnormal image being acquired by inputting the pseudo-abnormal image into a learning model, the learning model being capable of calculating an abnormality degree of an image when the image is input; acquire an inspection target image; and perform an inspection on the inspection target image by comparing an abnormality degree of the inspection target image with the set threshold value, the abnormality degree of the inspection target image being acquired by inputting the inspection target image into the learning model.

According to a second aspect of the present disclosure, in the information processing system according to the first aspect, the processor may be configured to generate the pseudo-abnormal image containing the abnormal image feature that differs depending on a user operation.

According to a third aspect of the present disclosure, in the information processing system according to the second aspect, the inspection on the inspection target image may be an inspection on an object appearing in the inspection target image, and the processor may be configured to generate the pseudo-abnormal image containing the abnormal image feature that differs depending on a type of the object appearing in the inspection target image, even with an identical user operation.

According to a fourth aspect of the present disclosure, in the information processing system according to any one of the first to third aspects, the processor may be configured to: generate a plurality of pseudo-abnormal images; acquire respective abnormality degrees of the plurality of pseudo-abnormal images; and set the acquired respective abnormality degrees of the plurality of pseudo-abnormal images as a plurality of threshold values for inspection.

According to a fifth aspect of the present disclosure, in the information processing system according to the fourth aspect, the processor may be configured to generate the plurality of pseudo-abnormal images, each containing the abnormal image feature having a different degree depending on which state the information processing system is in among a plurality of states, even with an identical user operation.

According to a sixth aspect of the present disclosure, in the information processing system according to any one of the first to fifth aspects, the inspection on the inspection target image may be an inspection on an object appearing in the inspection target image, and the processor may be configured to acquire the original image by executing a process depending on a type of the object appearing in the inspection target image.

According to a seventh aspect of the present disclosure, in the information processing system according to the sixth aspect, the inspection target image may be an image acquired by scanning a printed material that is printed on a basis of print data, and the processor may be configured to acquire the print data as the original image.

According to an eighth aspect of the present disclosure, in the information processing system according to any one of the first to seventh aspects, the processor may be configured to adjust the pseudo-abnormal image on a basis of a first user operation on an image other than the abnormal image feature in the pseudo-abnormal image and a second user operation on the abnormal image feature.

According to a ninth aspect of the present disclosure, in the information processing system according to the eighth aspect, the processor may be configured to perform control, in a case where the processor can receive the first user operation, to display a first display element indicating that the first user operation can be received, and in a case where the processor can receive the second user operation, to display a second display element indicating that the second user operation can be received.

According to a tenth aspect of the present disclosure, there is provided a program causing a computer to execute a process including acquiring an original image; receiving a user operation on the original image; generating a pseudo-abnormal image containing an abnormal image feature on a basis of the acquired original image and the user operation; setting an abnormality degree of the pseudo-abnormal image as a threshold value, the abnormality degree of the pseudo-abnormal image being acquired by inputting the pseudo-abnormal image into a learning model, the learning model being capable of calculating an abnormality degree of an image when the image is input; acquiring an inspection target image; and performing an inspection on the inspection target image by comparing an abnormality degree of the inspection target image with the set threshold value, the abnormality degree of the inspection target image being acquired by inputting the inspection target image into the learning model.

According to an eleventh aspect of the present disclosure, there is provided an information processing method including acquiring an original image; receiving a user operation on the original image; generating a pseudo-abnormal image containing an abnormal image feature on a basis of the acquired original image and the user operation; setting an abnormality degree of the pseudo-abnormal image as a threshold value, the abnormality degree of the pseudo-abnormal image being acquired by inputting the pseudo-abnormal image into a learning model, the learning model being capable of calculating an abnormality degree of an image when the image is input; acquiring an inspection target image; and performing an inspection on the inspection target image by comparing an abnormality degree of the inspection target image with the set threshold value, the abnormality degree of the inspection target image being acquired by inputting the inspection target image into the learning model.

According to the first aspect of the present disclosure, it becomes easier to perform an inspection on the inspection target image using the threshold value set as intended by the user.

According to the second aspect of the present disclosure, the threshold value can be set using various pseudo-abnormal images generated on the basis of various user operations.

According to the third aspect of the present disclosure, the complexity of generating pseudo-abnormal images by performing different user operations for each type of object appearing in the inspection target image can be reduced.

According to the fourth aspect of the present disclosure, it becomes easier to perform an inspection on the inspection target image using the plurality of threshold values set as intended by the user.

According to the fifth aspect of the present disclosure, the complexity of generating the pseudo-abnormal images by performing different user operations for each degree of the abnormal image feature can be reduced.

According to the sixth aspect of the present disclosure, an appropriate image corresponding to the object appearing in the inspection target image can be acquired as the original image of the pseudo-abnormal image used for setting the threshold value.

According to the seventh aspect of the present disclosure, in a case where the inspection target image is an image obtained by scanning a printed material, the original image of the pseudo-abnormal image can be easily acquired.

According to the eighth aspect of the present disclosure, operability during adjustment of the pseudo-abnormal image used for setting the threshold value can be improved.

According to the ninth aspect of the present disclosure, it becomes possible to inform the user of what operations can be received when the pseudo-abnormal image used for setting the threshold value is adjusted.

According to the tenth aspect of the present disclosure, it becomes easier to perform an inspection on the inspection target image using the threshold value set as intended by the user.

According to the eleventh aspect of the present disclosure, it becomes easier to perform an inspection on the inspection target image using the threshold value set as intended by the user.

### Brief Description of the Drawings

Exemplary embodiments of the present disclosure will be described in detail based on the following figures, wherein:
Fig. 1 is a diagram illustrating an example of a hardware configuration of an image inspection apparatus in the present exemplary embodiment;
Fig. 2 is a block diagram illustrating an example of a functional configuration of the image inspection apparatus in the present exemplary embodiment;
Figs. 3A and 3B are graphs illustrating a relationship between abnormality degrees of inspection target images and threshold values;
Fig. 4 is a view illustrating examples of user operations for generating abnormal images in a case where an inspection on an inspection target image is a printed surface inspection;
Fig. 5 is a view illustrating first examples of user operations for generating abnormal images in a case where the inspection on the inspection target image is a component inspection;
Fig. 6 is a view illustrating second examples of user operations for generating abnormal images in a case where the inspection on the inspection target image is a component inspection;
Figs. 7A and 7B are views illustrating user operations during fine-tuning of an abnormal image; and
Fig. 8 is a flowchart illustrating an operation example of the image inspection apparatus in the present exemplary embodiment.

### Detailed Description

Hereinafter, the present exemplary embodiment will be described in detail with reference to the accompanying drawings.

### (Overview of the present exemplary embodiment)

The present exemplary embodiment provides an information processing system that acquires an original image, receives a user operation on the original image, generates a pseudo-abnormal image on the basis of the original image and the user operation, sets an abnormality degree of the pseudo-abnormal image as a threshold value, acquires an inspection target image, and performs an inspection on the inspection target image by comparing an abnormality degree of the inspection target image with the threshold value.

Here, the "original image" may be any image as long as the image serves as the source for generating the pseudo-abnormal image. However, in the following description, a normal image will be used as an example.

In addition, the "system" may include a single apparatus or a plurality of apparatuses. In the following description, an information processing system including a single apparatus will be used as an example. Here, an image inspection apparatus will be used in the description as an example of such a single apparatus.

### (Hardware configuration of image inspection apparatus)

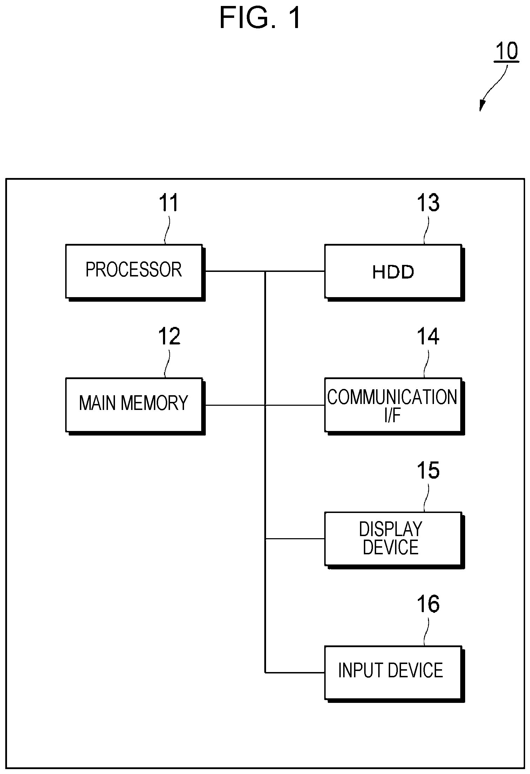

Fig. 1 is a diagram illustrating an example of a hardware configuration of an image inspection apparatus 10 in the present exemplary embodiment. As illustrated in the drawing, the image inspection apparatus 10 includes a processor 11. The image inspection apparatus 10 further includes a main memory 12 and a hard disk drive (HDD) 13. The image inspection apparatus 10 further includes a communication interface (I/F) 14, a display device 15, and an input device 16.

The processor 11 is configured to execute various types of software such as an operating system (OS) and an application to realize respective functions described below.

The main memory 12 is a memory used as a working memory or the like for the processor 11.

The HDD 13 stores input data for various types of software, output data from various types of software, and the like. The HDD 13 is, for example, a magnetic disk device.

The communication I/F 14 transmits and receives various types of information to and from other apparatuses via a communication line.

The display device 15 displays various types of information. The display device 15 is, for example, a display.

The input device 16 is used by a user to input information. The input device 16 is, for example, a keyboard or a mouse.

### (Functional configuration of image inspection apparatus)

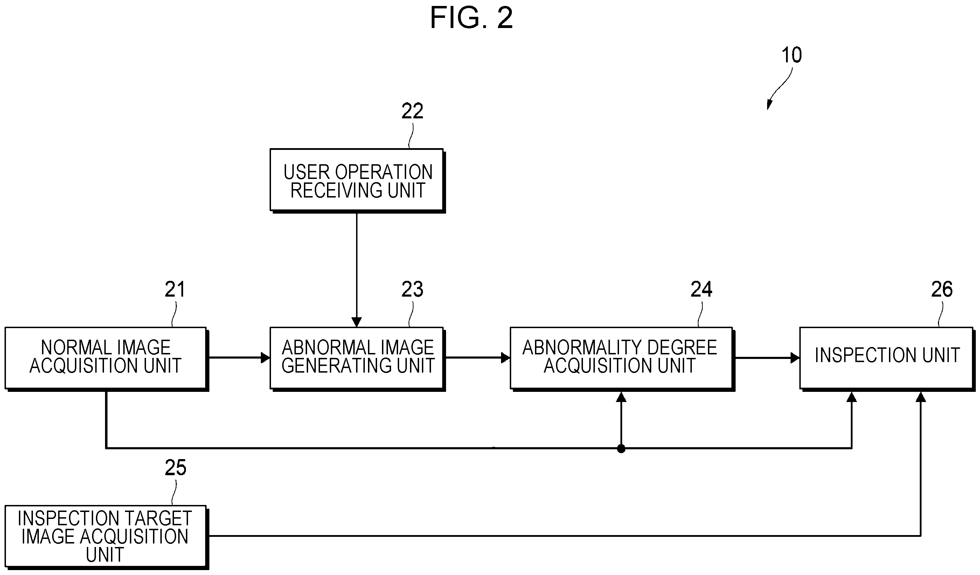

Fig. 2 is a block diagram illustrating an example of a functional configuration of the image inspection apparatus 10 in the present exemplary embodiment. As illustrated in the drawing, the image inspection apparatus 10 includes a normal image acquisition unit 21, a user operation receiving unit 22, and an abnormal image generating unit 23. The image inspection apparatus 10 further includes an abnormality degree acquisition unit 24, an inspection target image acquisition unit 25, and an inspection unit 26. These functional units are implemented by the processor 11 reading a program from the HDD 13 into the main memory 12 and executing the program.

The normal image acquisition unit 21 acquires a normal image and displays the normal image on the display device 15. Here, the normal image refers to an image containing a normal image feature as an image feature related to the image quality or content. Here, the normal image may be a normal image group including a plurality of normal images, but will be described as a "normal image" below. In the present exemplary embodiment, the normal image acquisition unit 21 performs the process as an example of a process of acquiring an original image.

The user operation receiving unit 22 receives a user operation on the normal image displayed on the display device 15. The user operation may be an operation performed by a user using the input device 16 on the display device 15. In the present exemplary embodiment, the user operation receiving unit 22 performs the process as an example of a process of receiving a user operation on the original image.

The abnormal image generating unit 23 receives the normal image from the normal image acquisition unit 21 and the user operation from the user operation receiving unit 22. Then, the abnormal image generating unit 23 generates an abnormal image on the basis of the normal image and the user operation. Here, the abnormal image refers to an image containing an abnormal image feature as an image feature related to the image quality or content. In addition, the abnormal image is not an image that actually contains an abnormal image feature, but rather an image that is generated to contain a pseudo-abnormal image feature. In this sense, the abnormal image is sometimes referred to as a "pseudo-abnormal image". In the present exemplary embodiment, the abnormal image generating unit 23 performs the process as an example of a process of generating a pseudo-abnormal image containing an abnormal image feature on the basis of the acquired original image and user operation.

The abnormal image generating unit 23 may generate a plurality of abnormal images on the basis of the normal image and the user operation. In the present exemplary embodiment, the abnormal image generating unit 23 performs the process as an example of a process of generating a plurality of pseudo-abnormal images. At this time, the image inspection apparatus 10 can be set to a high abnormal grade mode and a low abnormal grade mode. Assuming that a certain user operation is performed in this case. If the high abnormal grade mode is set, the abnormal image generating unit 23 may apply a high-level abnormality. If the low abnormal grade mode is set, the abnormal image generating unit 23 may apply a low-level abnormality. In this case, the high abnormal grade mode and the low abnormal grade mode are examples of a plurality of states. The process performed by the abnormal image generating unit 23 is an example of a process of generating a plurality of pseudo-abnormal images, each containing an abnormal image feature having a different degree depending on which state the system itself is in among the plurality of states, even with an identical user operation.

The abnormality degree acquisition unit 24 acquires an abnormality degree of the abnormal image generated by the abnormal image generating unit 23. Specifically, the abnormality degree acquisition unit 24 acquires an abnormality degree that is obtained by inputting the abnormal image into an AI (learning model). For example, the abnormality degree acquisition unit 24 receives the normal image from the normal image acquisition unit 21 and the abnormal image from the abnormal image generating unit 23. In addition, the abnormality degree acquisition unit 24 acquires a feature vector of the normal image. The feature vector is obtained by inputting the normal image into the AI (learning model). The abnormality degree acquisition unit 24 acquires a feature vector of the abnormal image. The feature vector is obtained by inputting the abnormal image into the AI (learning model). Furthermore, the abnormality degree acquisition unit 24 calculates the distance between these feature vectors and regards the distance as the abnormality degree. Then, the abnormality degree acquisition unit 24 sets the abnormality degree as a threshold value for determining whether an inspection target image is normal or abnormal. Here, the AI (learning model) may be provided within the image inspection apparatus 10. Alternatively, the AI (learning model) may be provided in a cloud server or the like outside the image inspection apparatus 10. In the present exemplary embodiment, the abnormality degree acquisition unit 24 performs the process as an example of a process of setting an abnormality degree of the pseudo-abnormal image as a threshold value. The abnormality degree is obtained by inputting the pseudo-abnormal image into the learning model. The learning model is capable of calculating an abnormality degree of an image when the image is input.

When the abnormal image generating unit 23 generates a plurality of abnormal images, the abnormality degree acquisition unit 24 acquires a plurality of abnormality degrees of the plurality of abnormal images. Here, each of the plurality of abnormality degrees corresponds to the abnormality degree of a respective one of the plurality of abnormal images. In the present exemplary embodiment, the abnormality degree acquisition unit 24 performs the process as an example of a process of acquiring respective abnormality degrees of the plurality of pseudo-abnormal images. Then, the abnormality degree acquisition unit 24 sets the plurality of abnormality degrees as threshold values for determining whether an inspection target image is normal or the extent to which the inspection target image is abnormal. In the present exemplary embodiment, the abnormality degree acquisition unit 24 performs the process as an example of a process of setting the acquired respective abnormality degrees of the plurality of pseudo-abnormal images as a plurality of threshold values for inspection.

The inspection target image acquisition unit 25 acquires an inspection target image. Here, the inspection target image refers to an image subjected to an inspection. Here, the inspection target image may be an inspection target image group including a plurality of inspection target images, but will be described as an "inspection target image" below. In the present exemplary embodiment, the inspection target image acquisition unit 25 performs the process as an example of a process of acquiring an inspection target image.

The inspection unit 26 acquires an abnormality degree of the inspection target image acquired by the inspection target image acquisition unit 25. Specifically, the inspection unit 26 acquires an abnormality degree that is obtained by inputting the inspection target image into the AI (learning model). For example, the inspection unit 26 receives the normal image from the normal image acquisition unit 21 and the inspection target image from the inspection target image acquisition unit 25. In addition, the inspection unit 26 acquires a feature vector of the normal image. The feature vector is obtained by inputting the normal image into the AI (learning model). The inspection unit 26 acquires a feature vector of the inspection target image. The feature vector is obtained by inputting the inspection target image into the AI (learning model). Furthermore, the inspection unit 26 calculates the distance between these feature vectors and regards the distance as the abnormality degree of the inspection target image. Then, the inspection unit 26 performs an inspection on the inspection target image by comparing the abnormality degree with the threshold value that is set by the abnormality degree acquisition unit 24. Here, the inspection on the inspection target image refers, for example, to an inspection related to the image quality or content of the inspection target image. In the present exemplary embodiment, the inspection unit 26 performs the process as an example of a process of performing an inspection on the inspection target image by comparing an abnormality degree of the inspection target image with the set threshold value. The abnormality degree is obtained by inputting the inspection target image into the learning model.

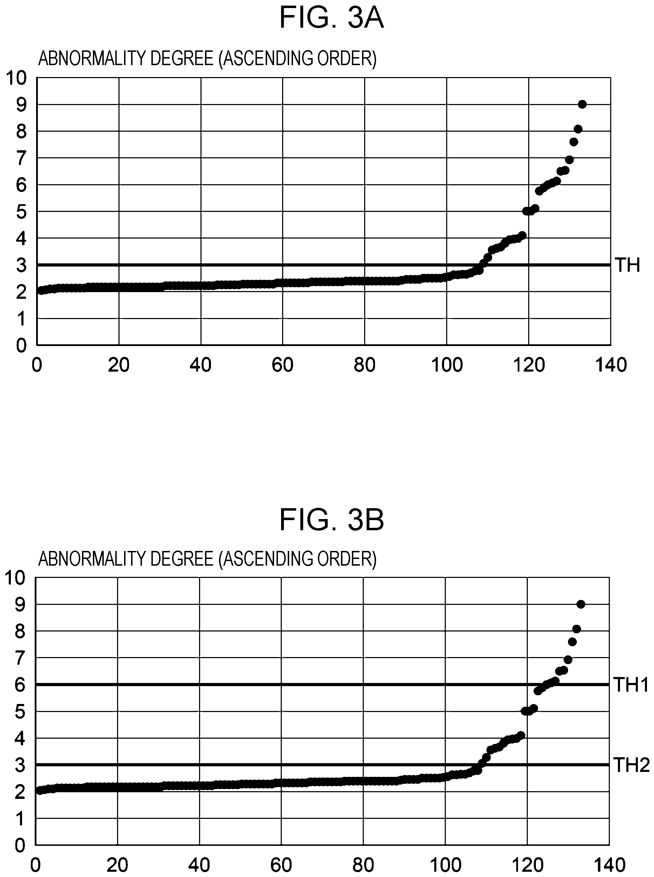

Figs. 3A and 3B are graphs illustrating a relationship between abnormality degrees of inspection target images and threshold values. In Figs. 3A and 3B, abnormality degrees of a plurality of inspection target images are arranged in ascending order.

In Fig. 3A, a single threshold value Th is illustrated. The threshold value TH is the threshold value obtained when the abnormal image generating unit 23 generates a single abnormal image and the abnormality degree acquisition unit 24 acquires a single abnormality degree. If the abnormality degree of the inspection target image is equal to or greater than the threshold value TH, the inspection target image is determined to be abnormal. If the abnormality degree of the inspection target image is less than the threshold value TH, the inspection target image is determined to be normal.

In Fig. 3B, a plurality of threshold values TH1 and TH2 are illustrated. The threshold values TH1 and TH2 are the threshold values obtained when the abnormal image generating unit 23 generates a plurality of abnormal images and the abnormality degree acquisition unit 24 acquires a plurality of abnormality degrees. If the abnormality degree of the inspection target image is equal to or greater than the threshold value TH1, the inspection target image is determined to be a high-level abnormality. If the abnormality degree of the inspection target image is less than the threshold value TH1 and equal to or greater than the threshold value TH2, the inspection target image is determined to be a low-level abnormality. If the abnormality degree of the inspection target image is less than the threshold value TH2, the inspection target image is determined to be normal.

### (Specific examples of user operations)

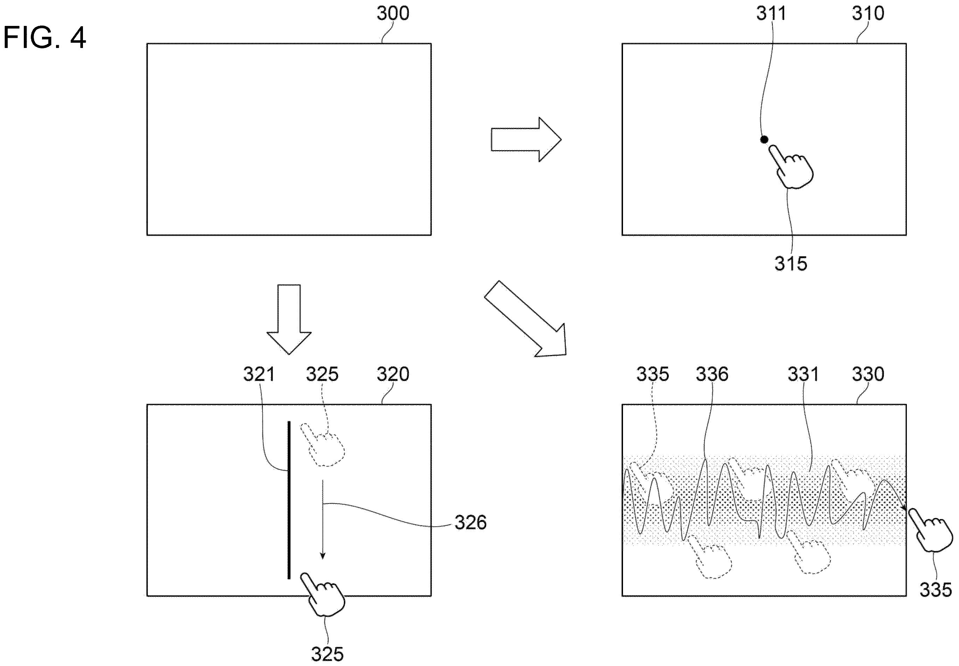

Fig. 4 is a view illustrating examples of user operations for generating abnormal images in a case where the inspection on the inspection target image is a printed surface inspection.

First, it is assumed that the normal image acquisition unit 21 displays a normal image 300.

Here, assume a user performs a clicking (tapping) operation as indicated by a finger mark 315. In response, the abnormal image generating unit 23 generates an abnormal image 310 with a dot 311.

Alternatively, assume the user performs a line-drawing operation while clicking as indicated by a finger mark 325 and an arrow 326. In response, the abnormal image generating unit 23 generates an abnormal image 320 with a streak 321.

Alternatively, assume the user performs a moving operation in a filling-like manner while clicking as indicated by a finger mark 335 and an arrow 336. In response, the abnormal image generating unit 23 generates an abnormal image 330 with unevenness 331.

Note that the abnormal image generating unit 23 may control the size of the abnormality using mouse wheel operations.

Additionally, the abnormal image generating unit 23 may control the intensity of the abnormality using mouse dragging operations.

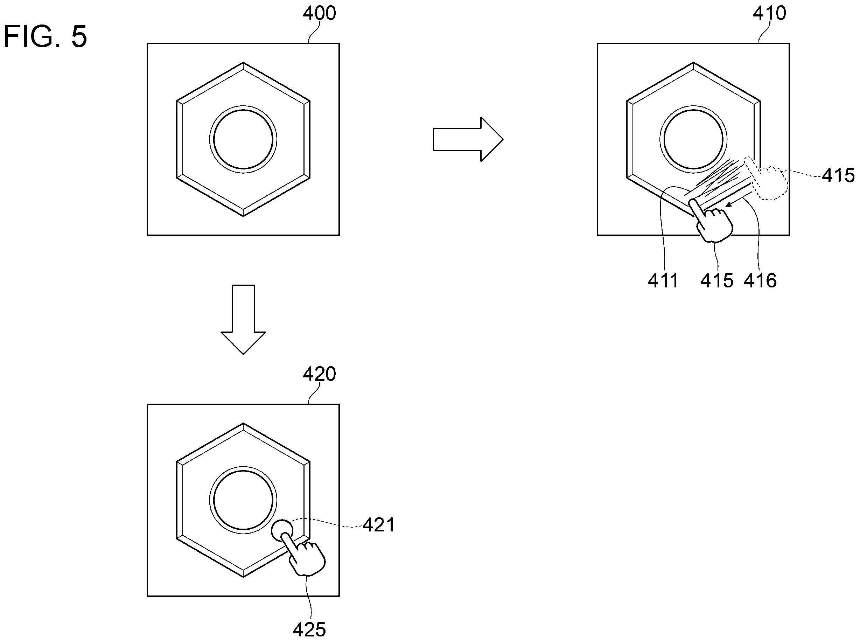

Fig. 5 is a view illustrating first examples of user operations for generating abnormal images in a case where the inspection on the inspection target image is a component inspection. Here, a metal nut is used as an example of the component.

First, it is assumed that the normal image acquisition unit 21 displays a normal image 400.

Here, assume a user performs a quick cursor-moving operation while clicking as indicated by a finger mark 415 and an arrow 416. In response, the abnormal image generating unit 23 generates an abnormal image 410 with a scratch defect 411. In this case, the abnormal image generating unit 23 may vary the degree of the scratch defect 411 depending on the number of times the cursor is moved.

Alternatively, assume the user performs a click-and-hold operation as indicated by a finger mark 425. In response, the abnormal image generating unit 23 generates an abnormal image 420 with a dent defect 421. In this case, the abnormal image generating unit 23 may vary the dent degree of the dent defect 421 depending on the duration of the click-and-hold or the strength of the tap.

Note that the abnormal image generating unit 23 may control the size of the abnormality using mouse wheel operations.

Additionally, the abnormal image generating unit 23 may control the intensity of the abnormality using mouse dragging operations.

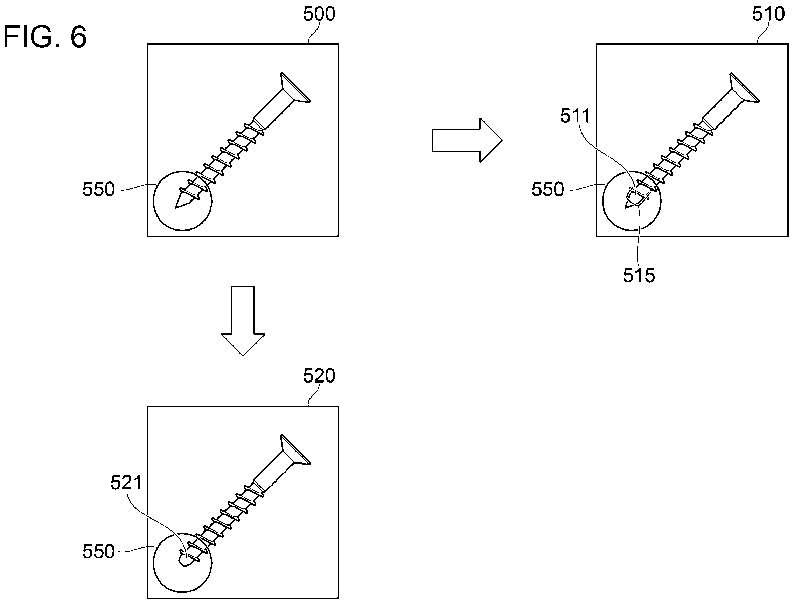

Fig. 6 is a view illustrating second examples of user operations for generating abnormal images in a case where the inspection on the inspection target image is a component inspection. Here, a screw is used as an example of the component.

First, it is assumed that the normal image acquisition unit 21 displays a normal image 500.

Here, assume a user selects a region 550 and performs an illustration-drawing operation as indicated by a line 515. In response, the abnormal image generating unit 23 generates an abnormal image 510 with a chipped distal end portion 511 as represented by the illustration.

Alternatively, assume the user selects the region 550 and performs a text-or-voice input operation, such as "Broken" or "Chipped", in a supported language. In response, the abnormal image generating unit 23 generates an abnormal image 520 with a chipped distal end portion 521. Here, simply stating "Broken" or "Chipped" may encompass various types of chipping. Accordingly, the abnormal image generating unit 23 may generate a plurality of abnormal images 520, each with a chipped distal end portion 521 representing a different type of chipping. This allows the user to select, from the plurality of abnormal images 520, an abnormal image 520 with a chipped distal end portion 521 representing a desired type of breakage.

In Figs. 4 to 6, the abnormal image generating unit 23 generates different abnormal images depending on user operations. Here, the different abnormal images are abnormal images, each containing the abnormal image feature that differs. In this sense, the process performed by the abnormal image generating unit 23 is an example of a process of generating pseudo-abnormal images, each containing an abnormal image feature that differs depending on a user operation.

Furthermore, in Figs. 4 to 6, the inspection on the inspection target image is assumed to be a printed surface inspection or a component inspection. Here, the printed surface and components can each be regarded as an object appearing in the inspection target image. In this sense, the printed surface inspection and the component inspection are examples of inspections on objects appearing in the inspection target image.

At this time, in Figs. 4 to 6, the abnormal image generating unit 23 generates different abnormal images depending on the types of inspection, even with an identical user operation. In other words, the abnormal image generating unit 23 generates different abnormal images depending on the types of objects appearing in the inspection target image, even with an identical user operation. For example, consider a case where a user performs a line-drawing operation while clicking. In this case, if the inspection target is a printed surface as illustrated in Fig. 4, the abnormal image generating unit 23 generates the abnormal image 320 with the streak 321. On the other hand, if the inspection target is a component as illustrated in Fig. 5, the abnormal image generating unit 23 generates the abnormal image 420 with the scratch defect 411. In this case, the process performed by the abnormal image generating unit 23 is an example of a process of generating pseudo-abnormal images, each containing an abnormal image feature that differs depending on the type of object appearing in the inspection target image, even with an identical user operation.

Furthermore, in Figs. 4 to 6, the normal image acquisition unit 21 acquires normal images by executing different processes depending on the types of inspection. In other words, the normal image acquisition unit 21 acquires normal images by executing different processes depending on the types of objects appearing in the inspection target image. In this case, the process performed by the normal image acquisition unit 21 is an example of a process of acquiring original images by executing processes depending on the types of objects appearing in the inspection target image.

For example, consider a case where the inspection target is a printed surface as illustrated in Fig. 4. In this case, the normal image acquisition unit 21 only needs to acquire print data that serves as a source for the printed surface as the normal image 300. Here, assume the printed surface is an image obtained by scanning a printed material that is printed on the basis of the print data. In this case, the normal image acquisition unit 21 acquires the print data as the normal image 300. In this case, the process performed by the normal image acquisition unit 21 is an example of a process of acquiring print data as an original image.

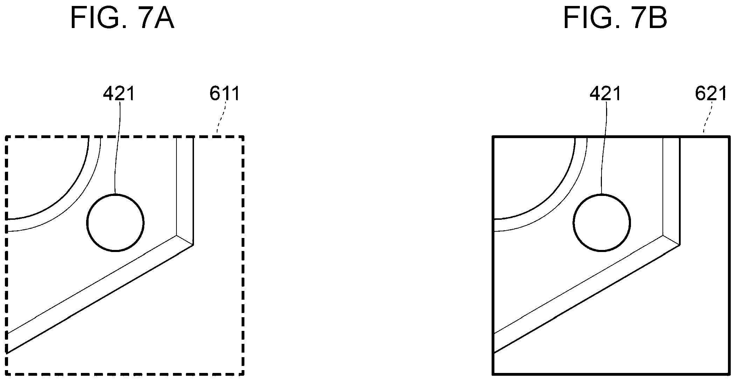

Figs. 7A and 7B are views illustrating user operations during fine-tuning of an abnormal image. Here, the abnormal image 420 illustrated in Fig. 5 is used as an example of the abnormal image, but the user operation can be applied to any abnormal image.

Fig. 7A illustrates a user operation on the background image of the abnormal image. Here, the background image refers to the image other than the abnormal image feature in the abnormal image. In Fig. 7A, a user performs an operation to enlarge the metal nut in the state of the abnormal image 420 in Fig. 5. In this state, the user can also perform an operation to move the metal nut, for example, to position the dent defect 421 at the center of the image. Alternatively, the user can perform an operation to reduce the size of the metal nut. The user may, for example, operate a mouse wheel to enlarge or reduce the background image. A thick dashed frame 611 surrounding the image indicates that these user operations on the background image can be performed. The thick dashed frame 611 may be, for example, a red frame. In this case, the user operation on the background image is an example of a first user operation on the image other than the abnormal image feature. The thick dashed frame 611 is an example of a first display element indicating that the first user operation can be received.

Fig. 7B illustrates a user operation on the abnormal image feature of the abnormal image. In Fig. 7B, a user can perform an operation to change the size or color of the dent defect 421. The user may, for example, operate the mouse wheel to change the size of the dent defect 421. Additionally, the user may, for example, write a character on the display device 15 using a mouse to change the color of the dent defect 421. Here, examples of the character include characters representing colors, such as "C", "M", "Y", and "K", and their values. Alternatively, the user may, for example, input each color and its corresponding value using a keyboard to change the color of the dent defect 421. A thick solid frame 621 surrounding the image indicates that these user operations on the abnormal image feature can be performed. The thick solid frame 621 may be, for example, a green frame. In this case, the user operation on the abnormal image feature is an example of a second user operation on the abnormal image feature. The thick solid frame 621 is an example of a second display element indicating that the second user operation can be received.

In the state of Fig. 7B, when the portion around the abnormal image feature is clicked (tapped), the image may transition to the state of Fig. 7A.

When the user performs these operations, the abnormal image generating unit 23 fine-tunes the abnormal image on the basis of these operations. At this time, the abnormal image generating unit 23 displays the thick dashed frame 611 or the thick solid frame 621 to indicate which of these operations the abnormal image generating unit 23 can receive. In this case, the process performed by the abnormal image generating unit 23 is an example of a process of adjusting the pseudo-abnormal image on the basis of the first user operation and the second user operation. The process performed by the abnormal image generating unit 23 is an example of a process of controlling to display the first display element or the second display element.

### (Operation of image inspection apparatus)

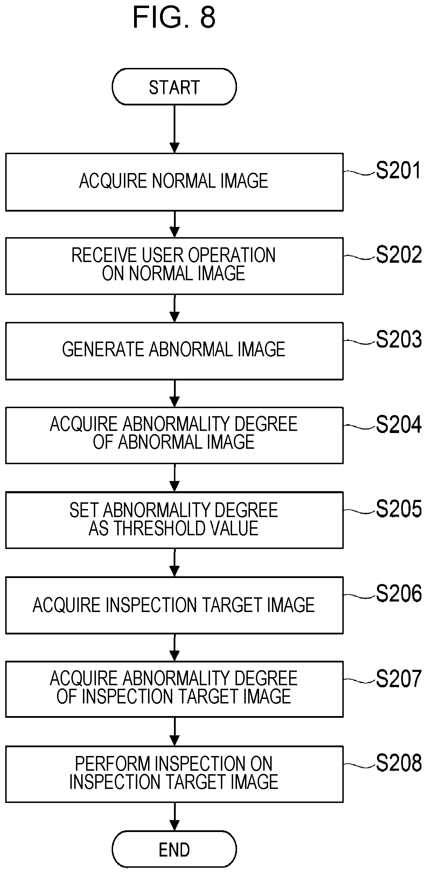

Fig. 8 is a flowchart illustrating an operation example of the image inspection apparatus 10 in the present exemplary embodiment.

As illustrated in the flowchart, in the image inspection apparatus 10, the normal image acquisition unit 21 first acquires a normal image (step 201). As a result, the normal image is displayed on the display device 15. Here, the normal image refers to an image containing a normal image feature as an image feature related to the image quality or content.

Next, in the image inspection apparatus 10, the user operation receiving unit 22 receives a user operation on the normal image (step 202). The user operation may be an operation performed by a user using the input device 16 on the display device 15.

Next, in the image inspection apparatus 10, the abnormal image generating unit 23 generates an abnormal image (step 203). Specifically, the abnormal image generating unit 23 retains the normal image acquired in step 201 and the user operation received in step 202. Then, the abnormal image generating unit 23 generates an abnormal image on the basis of the normal image and the user operation. Here, the abnormal image refers to an image containing an abnormal image feature as an image feature related to the image quality or content.

Next, in the image inspection apparatus 10, the abnormality degree acquisition unit 24 acquires an abnormality degree of the abnormal image generated in step 203 (step 204). Specifically, the abnormality degree acquisition unit 24 acquires an abnormality degree that is obtained by inputting the abnormal image into an AI (learning model).

Then, the abnormality degree acquisition unit 24 sets the abnormality degree as a threshold value for determining whether an inspection target image is normal or abnormal (step 205).

Meanwhile, in the image inspection apparatus 10, the inspection target image acquisition unit 25 acquires an inspection target image (step 206). Here, the inspection target image refers to an image subjected to an inspection.

Next, in the image inspection apparatus 10, the inspection unit 26 acquires an abnormality degree of the inspection target image acquired in step 206 (step 207). Specifically, the inspection unit 26 acquires an abnormality degree that is obtained by inputting the inspection target image into the AI (learning model).

Then, the inspection unit 26 performs an inspection on the inspection target image (step 208). Specifically, the inspection unit 26 performs an inspection by comparing the abnormality degree with the threshold value set in step 205. Here, the inspection on the inspection target image refers, for example, to an inspection related to the image quality or content of the inspection target image.

### (Processor)

In the present exemplary embodiment, each process is executed by an arbitrary computer. The arbitrary computer may execute these processes using a processor as hardware, a program as software, or a combination of both. In this case, the processor may be configured to execute various types of processes in the present exemplary embodiment in collaboration with the program and may function as each unit described in the present exemplary embodiment. The order of processes executed by the processor is not limited to the described order and may be changed as appropriate. The arbitrary computer may be a general-purpose computer, a computer for specific applications, a workstation, or any other system capable of executing each process.

The processor may include one or more pieces of hardware, and the type of hardware is not limited. For example, the processor may include a programmable logic device such as a central processing unit (CPU), a micro processing unit (MPU), or a field programmable gate array (FPGA), a dedicated circuit for executing specific processes such as an application specific integrated circuit (ASIC), or hardware such as a graphic processing unit (GPU) or a neural processing unit (NPU). In addition, the type of hardware may be a combination of different types of hardware. In a case where a plurality of pieces of hardware are configured to execute one or more processes of a processor, the plurality of pieces of hardware may exist in physically separate apparatuses or within the same apparatus. In addition, in any exemplary embodiment, the order of processes executed by the processor is not limited to the above-described order and may be changed as appropriate. Note that the hardware may include electrical circuitry where circuit elements such as semiconductor elements are combined.

Furthermore, the program may be software such as firmware or microcode. Alternatively, the program may be, for example, a group of program modules, and each function of the program may be implemented by a processor configured to execute the corresponding function. The program may include program code or a plurality of code segments stored in one or more non-transitory computer-readable media (such as storage media or other storage). The program may be divided and stored in a plurality of non-transitory computer-readable media that exist in physically separate apparatuses. Program code or a code segment may represent a procedure, a function, a subprogram, a routine, a subroutine, a module, a software package, a class, or any combination of instructions, data structures, and program statements. Program code or a code segment may be coupled to another code segment or a hardware circuit by transmitting and/or receiving information, data, arguments, parameters, or memory contents.

### (Program)

The present disclosure is also applicable to a program and a program product.

For example, the program and the program product to which the present exemplary embodiment is applied causes a computer to realize the functions including: acquiring an original image; receiving a user operation on the original image; generating a pseudo-abnormal image containing an abnormal image feature on the basis of the acquired original image and user operation; setting an abnormality degree of the pseudo-abnormal image as a threshold value, the abnormality degree being obtained by inputting the pseudo-abnormal image into a learning model, the learning model being capable of calculating an abnormality degree of an image when the image is input; acquiring an inspection target image; and performing an inspection on the inspection target image by comparing an abnormality degree of the inspection target image with the set threshold value, the abnormality degree being obtained by inputting the inspection target image into the learning model.

Note that the program to which the present exemplary embodiment is applied can be provided via a communication unit. Furthermore, the program to which the present exemplary embodiment is applied can also be provided by being stored in a recording medium such as a CD-ROM.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising:
   a processor configured to:
   acquire an original image;
   receive a user operation on the original image;
   generate a pseudo-abnormal image containing an abnormal image feature on a basis of the acquired original image and the user operation;
   set an abnormality degree of the pseudo-abnormal image as a threshold value, the abnormality degree of the pseudo-abnormal image being acquired by inputting the pseudo-abnormal image into a learning model, the learning model being capable of calculating an abnormality degree of an image when the image is input;
   acquire an inspection target image; and
   perform an inspection on the inspection target image by comparing an abnormality degree of the inspection target image with the set threshold value, the abnormality degree of the inspection target image being acquired by inputting the inspection target image into the learning model.
(((2))) The information processing system according to (((1))), wherein the processor is configured to generate the pseudo-abnormal image containing the abnormal image feature that differs depending on a user operation.
(((3))) The information processing system according to (((2))), wherein
   the inspection on the inspection target image is an inspection on an object appearing in the inspection target image, and
   the processor is configured to generate the pseudo-abnormal image containing the abnormal image feature that differs depending on a type of the object appearing in the inspection target image, even with an identical user operation.
(((4))) The information processing system according to any one of (((1))) to (((3))), wherein
   the processor is configured to:
   generate a plurality of pseudo-abnormal images;
   acquire respective abnormality degrees of the plurality of pseudo-abnormal images; and
   set the acquired respective abnormality degrees of the plurality of pseudo-abnormal images as a plurality of threshold values for inspection.
(((5))) The information processing system according to (((4))), wherein the processor is configured to generate the plurality of pseudo-abnormal images, each containing the abnormal image feature having a different degree depending on which state the information processing system is in among a plurality of states, even with an identical user operation.
(((6))) The information processing system according to any one of (((1))) to (((5))), wherein
   the inspection on the inspection target image is an inspection on an object appearing in the inspection target image, and
   the processor is configured to acquire the original image by executing a process depending on a type of the object appearing in the inspection target image.
(((7))) The information processing system according to (((6))), wherein
   the inspection target image is an image acquired by scanning a printed material that is printed on a basis of print data, and
   the processor is configured to acquire the print data as the original image.
(((8))) The information processing system according to any one of (((1))) to (((7))), wherein the processor is configured to adjust the pseudo-abnormal image on a basis of a first user operation on an image other than the abnormal image feature in the pseudo-abnormal image and a second user operation on the abnormal image feature.
(((9))) The information processing system according to (((8))), wherein the processor is configured to perform control, in a case where the processor can receive the first user operation, to display a first display element indicating that the first user operation can be received, and in a case where the processor can receive the second user operation, to display a second display element indicating that the second user operation can be received.
(((10))) A program causing a computer to execute a process comprising:
   acquiring an original image;
   receiving a user operation on the original image;
   generating a pseudo-abnormal image containing an abnormal image feature on a basis of the acquired original image and the user operation;
   setting an abnormality degree of the pseudo-abnormal image as a threshold value, the abnormality degree of the pseudo-abnormal image being acquired by inputting the pseudo-abnormal image into a learning model, the learning model being capable of calculating an abnormality degree of an image when the image is input;
   acquiring an inspection target image; and
   performing an inspection on the inspection target image by comparing an abnormality degree of the inspection target image with the set threshold value, the abnormality degree of the inspection target image being acquired by inputting the inspection target image into the learning model.

According to (((1))) of the present disclosure, it becomes easier to perform an inspection on the inspection target image using the threshold value set as intended by the user.

According to (((2))) of the present disclosure, the threshold value can be set using various pseudo-abnormal images generated on the basis of various user operations.

According to (((3))) of the present disclosure, the complexity of generating pseudo-abnormal images by performing different user operations for each type of object appearing in the inspection target image can be reduced.

According to (((4))) of the present disclosure, it becomes easier to perform an inspection on the inspection target image using the plurality of threshold values set as intended by the user.

According to (((5))) of the present disclosure, the complexity of generating the pseudo-abnormal images by performing different user operations for each degree of the abnormal image feature can be reduced.

According to (((6))) of the present disclosure, an appropriate image corresponding to the object appearing in the inspection target image can be acquired as the original image of the pseudo-abnormal image used for setting the threshold value.

According to (((7))) of the present disclosure, in a case where the inspection target image is an image obtained by scanning a printed material, the original image of the pseudo-abnormal image can be easily acquired.

According to (((8))) of the present disclosure, operability during adjustment of the pseudo-abnormal image used for setting the threshold value can be improved.

According to (((9))) of the present disclosure, it becomes possible to inform the user of what operations can be received when the pseudo-abnormal image used for setting the threshold value is adjusted.

According to (((10))) of the present disclosure, it becomes easier to perform an inspection on the inspection target image using the threshold value set as intended by the user.

## Claims

1. An information processing system comprising:
a processor configured to:
acquire an original image;
receive a user operation on the original image;
generate a pseudo-abnormal image containing an abnormal image feature on a basis of the acquired original image and the user operation;
set an abnormality degree of the pseudo-abnormal image as a threshold value, the abnormality degree of the pseudo-abnormal image being acquired by inputting the pseudo-abnormal image into a learning model, the learning model being capable of calculating an abnormality degree of an image when the image is input;
acquire an inspection target image; and
perform an inspection on the inspection target image by comparing an abnormality degree of the inspection target image with the set threshold value, the abnormality degree of the inspection target image being acquired by inputting the inspection target image into the learning model.

2. The information processing system according to claim 1, wherein the processor is configured to generate the pseudo-abnormal image containing the abnormal image feature that differs depending on a user operation.

3. The information processing system according to claim 2, wherein
the inspection on the inspection target image is an inspection on an object appearing in the inspection target image, and
the processor is configured to generate the pseudo-abnormal image containing the abnormal image feature that differs depending on a type of the object appearing in the inspection target image, even with an identical user operation.

4. The information processing system according to any one of claims 1 to 3, wherein the processor is configured to:
generate a plurality of pseudo-abnormal images;
acquire respective abnormality degrees of the plurality of pseudo-abnormal images; and
set the acquired respective abnormality degrees of the plurality of pseudo-abnormal images as a plurality of threshold values for inspection.

5. The information processing system according to claim 4, wherein the processor is configured to generate the plurality of pseudo-abnormal images, each containing the abnormal image feature having a different degree depending on which state the information processing system is in among a plurality of states, even with an identical user operation.

6. The information processing system according to any one of claims 1 to 5, wherein
the inspection on the inspection target image is an inspection on an object appearing in the inspection target image, and
the processor is configured to acquire the original image by executing a process depending on a type of the object appearing in the inspection target image.

7. The information processing system according to claim 6, wherein
the inspection target image is an image acquired by scanning a printed material that is printed on a basis of print data, and
the processor is configured to acquire the print data as the original image.

8. The information processing system according to any one of claims 1 to 7, wherein the processor is configured to adjust the pseudo-abnormal image on a basis of a first user operation on an image other than the abnormal image feature in the pseudo-abnormal image and a second user operation on the abnormal image feature.

9. The information processing system according to claim 8, wherein the processor is configured to perform control, in a case where the processor can receive the first user operation, to display a first display element indicating that the first user operation can be received, and in a case where the processor can receive the second user operation, to display a second display element indicating that the second user operation can be received.

10. A program causing a computer to execute a process comprising:
acquiring an original image;
receiving a user operation on the original image;
generating a pseudo-abnormal image containing an abnormal image feature on a basis of the acquired original image and the user operation;
setting an abnormality degree of the pseudo-abnormal image as a threshold value, the abnormality degree of the pseudo-abnormal image being acquired by inputting the pseudo-abnormal image into a learning model, the learning model being capable of calculating an abnormality degree of an image when the image is input;
acquiring an inspection target image; and
performing an inspection on the inspection target image by comparing an abnormality degree of the inspection target image with the set threshold value, the abnormality degree of the inspection target image being acquired by inputting the inspection target image into the learning model.

11. An information processing method comprising:
acquiring an original image;
receiving a user operation on the original image;
generating a pseudo-abnormal image containing an abnormal image feature on a basis of the acquired original image and the user operation;
setting an abnormality degree of the pseudo-abnormal image as a threshold value, the abnormality degree of the pseudo-abnormal image being acquired by inputting the pseudo-abnormal image into a learning model, the learning model being capable of calculating an abnormality degree of an image when the image is input;
acquiring an inspection target image; and
performing an inspection on the inspection target image by comparing an abnormality degree of the inspection target image with the set threshold value, the abnormality degree of the inspection target image being acquired by inputting the inspection target image into the learning model.
